(19) Europäisches Patentamt
European Patent Office
Office européen des brevets

(11) Veröffentlichungsnummer: **0 173 128**
**A1**

(12) # EUROPÄISCHE PATENTANMELDUNG

(21) Anmeldenummer: **85109876.4**

(22) Anmeldetag: **06.08.85**

(51) Int. Cl.⁴: **C 07 C 103/60**, C 08 F 20/58

(30) Priorität: **18.08.84 DE 3430445**

(43) Veröffentlichungstag der Anmeldung: **05.03.86 Patentblatt 86/10**

(84) Benannte Vertragsstaaten: **DE FR GB IT NL**

(71) Anmelder: **Röhm GmbH, Kirschenallee Postfach 4242, D-6100 Darmstadt 1 (DE)**

(72) Erfinder: **Besecke, Siegmund, Dr., Auf dem Kreuzberg 6, D-6104 Seeheim-Jugenheim (DE)**

(54) **Neue Alkylamide der Acryl- und der Methacrylsäure.**

(57) Die Erfindung betrifft Verbindungen der Formel I

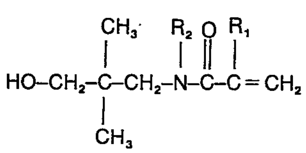

I

worin $R_1$ für Wasserstoff oder Methyl und $R_2$ für Wasserstoff oder einem Alkylrest mit 1 bis 3 Kohlenstoffatomen steht, die als vernetzungsfähige Monomere in der radikalischen Polymerisation dienen.

EP 0 173 128 A1

ACTORUM AG

# Neue Alkylamide der Acryl- und der Methacrylsäure

## Gebiet der Erfindung

Die Erfindung betrifft neue Alkylamide der Acryl- und der Methacrylsäure, die z.B. als Monomere zur radikalischen Polymerisation verwendet werden können.

## Stand der Technik

Der Technik steht eine relativ große Anzahl radikalisch polymerisierbarer Monomerer zur Verfügung. Eine bedeutende Rolle spielen Derivate der Acryl- und der Methacrylsäure. insbesondere deren Ester und zu einem geringeren Anteil die Amide. So wurde auf der Grundlage speziell des Methylmethacrylats eine eigene Klasse von Kunststoffen entwickelt, die in vielen Bereichen der Technik eine extensive Anwendung findet. (Vgl. R. Vieweg, F. Esser, Kunststoff-Handbuch, Band IX, "Polymethacrylat", C. Hanser Verlag, 1975). Neben dem Methylmethacrylat dienen zahlreiche andere Acryl- bzw. Methacrylverbindungen als monomere Ausgangsverbindungen für Polymerisate und Copolymerisate. (Vgl. J. Brandrup & E.H. Immergut, Polymer Handbook, 2. Auflage, Wiley-Interscience, 1975).
Durch die Wahl der Monomeren und des Polymerisationsmodus lassen sich die Eigenschaften der gebildeten Polymeren beeinflussen. Eine wesentliche Beeinflussung der Eigenschaft bringt z.B. die räumliche Verknüpfung der Polymerketten untereinander zu einem Netzpolymeren. die sogenannte Vernetzung

mit sich. Die Vernetzung kann zum Beispiel durch Einbau von Monomeren mit mehreren polymerisationsfähigen Gruppen im Molekül wie den (Meth)acrylestern von Di- und Polyolen oder den Di-(Meth)acrylamiden von Diaminen bewirkt werden. (Vgl. H. Rauch-Puntigam in "Acryl- und Methacrylverbindungen". Springer-Verlag. Heidelberg. 1967. pg. 184 und 267).

Die Technik wendet aber auch in erheblichem Umfang das Prinzip an, relativ niedermolekulare Acrylharze anzuwenden. die in der Hitze "härten", in erster Linie durch thermisch induzierte Vernetzungsreaktionen. Solche hitzehärtbaren Acrylharze können z.B. N-Methylol- oder N-methyloletherfunktionen von (Meth)acrylamiden, Glycidylestergruppen der (Meth)acrylsäure, Carboxylfunktionen und/oder Hydroxyalkylester bzw. Hydroxyalkylamidfunktionen enthalten. (Vgl. Rauch-Puntigam loc.cit.).
Acrylatcopolymerisate mit hydroxylgruppenhaltigen Estern lassen sich z.B. mit Amino-Formaldehydharzen vernetzen. Ihre Herstellung ist von verschiedenen Seiten bearbeitet werden. (Canad. PS 659 301, DE-AS 1 149 842, DE-AS 1 183 613, US-PS 2 681 897).

Copolymerisate des 2-Hydroethylacrylamids und seiner N-substituierten Derivate werden in der US-PS 2 718 515 beschrieben.

Aufgabe und Lösung

Ungeachtet der großen Zahl bekannter Monomerer rufen bestimmte Anforderungsprofile für Kunststoffe den Wunsch nach neuen Monomeren hervor, die auf diese Anforderungen zugeschnitten

sind. Dies gilt auch für Vertreter der Gruppe der hydroxygruppenhaltigen N-Alkylamide der Acryl- und der Methacrylsäure.
Von einigem Einfluß auf die Reaktivität ist bekanntlich die sterische Konfiguration der OH-Gruppe.
Es wurde nun gefunden. daß Hydroxyalkylamide der Acryl- bzw. der Methacrylsäure der Formel I

$$HO-CH_2-C(CH_3)_2-CH_2-N(R_2)-C(=O)-C(R_1)=CH_2 \qquad I$$

worin $R_1$ für Wasserstoff oder Methyl und $R_2$ für Wasserstoff oder einen Alkylrest mit 1 bis 3 Kohlenstoffatomen steht, günstige Eigenschaften aufweisen.

Die Herstellung der erfindungsgemäßen Verbindungen der Formel I kann in Anlehnung an sich bekannter Methoden erfolgen. Nach einer Herstellungsweise gelangt man zu den Amiden durch Umsetzung von einem Mol eines aktivierten Säurederivats der Formel II

$$X-C(=O)-C(R_1)=CH_2 \qquad II$$

worin $R_1$ für Wasserstoff oder Methyl und X für Chlor, Brom oder einen Rest

$-O-C(=O)-C(R_1)=CH_2$ steht mit einem 3-Amino-2.2-dimethylpropan-1-ol der Formel III

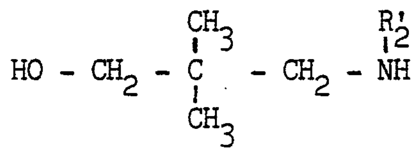 III

worin $R'_2$ für Wasserstoff oder einen Alkylrest mit 1 bis 3 Kohlenstoffatomen steht, gegebenenfalls z.B. wenn X für Chlor oder Brom steht in Anwesenheit eines Säureakzeptors, wie z.B. eines tert. Amins wie Triethylamin, N-Alkylmorpholin oder vorzugsweise eines Überschusses des Amins der Formel III, beispielsweise in einem inerten Lösungsmittel, z.B. einem aromatischen Lösungsmittel wie Pyridin, Toluol oder einem chlorierten Kohlenwasserstoff wie Methylenchlorid. Im Interesse einer extraktiven Aufarbeitung empfiehlt sich die Anwendung der nicht mit Wasser mischbaren Lösungsmittel.

Besonders bevorzugt ist die Umsetzung von (Meth)acrylsäureanhydrid mit den Aminen der Formel III. Dabei werden mindestens äquimolare Mengen an Amin der Formel III, bezogen auf das Anhydrid der Formel II, eingesetzt. Als Lösungsmittel empfiehlt sich z.B. Methylenchlorid. Zweckmäßig gibt man das Anhydrid der Formel II zu dem Amin der Formel III zu, beispielsweise durch Eintropfen vorzugsweise unter Rühren, wobei die Reaktionstemperatur eher unterhalb Raumtemperatur, beispielsweise im Bereich 10 - 18°C gehalten werden sollte.

Man läßt die Reaktion nach Zugabe des Anhydrids noch über einen gewissen Zeitraum. beispielsweise eine Stunde ablaufen. etwa bei Raumtemperatur.
Auch die Aufarbeitung kann in an sich bekannter Weise erfolgen. So kann beispielsweise das Reaktionsgemisch in

eine wäßrig-alkalische Lösung eingebracht und die organische Phase abgetrennt werden. Die wäßrige Phase wird zweckmäßig mehrmals mit dem nicht mit Wasser mischbaren Lösungsmittel extrahiert und die Extrakte werden vereint aufgearbeitet.
Die Verbindungen der Formel I sind tendenzmäßig kristalline Verbindungen (mit teils relativ niedrigem Schmelzpunkt) die sich bei Bedarf aus geeigneten Lösungsmitteln umkristallisieren lassen.
Die Anwesenheit von Polymerisationsinhibitoren wie Chinonen, Phenolen, Nitroverbindungen u.ä. ist in der Regel nicht zwingend erforderlich; sie können aber auch den Ansätzen in den üblichen Mengen (0,01 bis 0,1 Gew.-%) zugefügt werden.
Die erfindungsgemäßen Verbindungen der Formel I können als monomere Bausteine für Polymerisate angewendet werden, insbesondere in Copolymerisaten mit Estern der Acryl- und der Methacrylsäure.

Das folgende Beispiel dient zur Erläuterung der Erfindung.

Beispiel 1

Darstellung von 3-Hydroxy-2,2-dimethyl-N-propyl-1-methacrylamid

In einem 500 ml-Mehrhalskolben mit Rückflußkühler, Thermometer, Tropfkühler und Rührer, werden 103 g 3-Amino-2,2-dimethylpropan-1-ol und 150 ml Methylenchlorid vorgelegt. Bei 10 - 18°C tropft man nun 154 g Methacrylsäureanhydrid unter gutem Rühren zu. Dabei tritt vorübergehend eventuell ein weißer Niederschlag auf. Man rührt nun 1 Stunde bei Raumtemperatur nach und rührt anschließend die Mischung in 400 ml 10 %-ige Natronlauge ein. Die organische Phase wird abgetrennt und die wäßrige 3 mal mit je 200 ml Methylenchlorid ausgeschüttelt. Die vereinigten organischen Phasen werden anschließend mit Natriumsulfat getrocknet und die Lösung am Rotationsverdampfer soweit wie möglich eingeengt (Wasserstrahlvakuum, ca. 50°C Badtemperatur). Man erhält 155 g eines viskosen öligen Rückstands, der bei Raumtemperatur kristallisiert und aus fast reinem 3-Hydroxy-2,2-dimethyl-N-propyl-1-methacrylamid besteht.
(Schmelzpunkt ca. 35°C).
Analog Beispiel 1 können auch die Acrylamide der Formel I hergestellt werden.

Neue Alkylamide der Acryl- und der Methacrylsäure

Patentansprüche

1. Verbindungen der Formel I

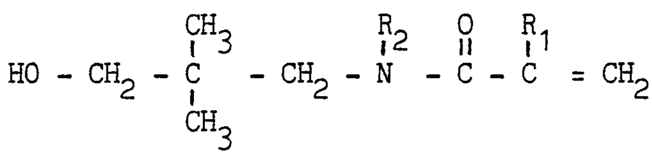

I

worin $R_1$ für Wasserstoff oder Methyl und $R_2$ für Wasserstoff oder einen Alkylrest mit 1 bis 3 Kohlenstoffatomen steht.

2. 3-Hydroxy-2,2-dimethyl-N-propyl-1-methacrylamid mit Fp. ca. 35°C.

3. 3-Hydroxy-2,2-dimethyl-N-propyl-1-acrylamid.

4. Verwendung der Verbindungen der Formel I gemäß den Ansprüchen 1 bis 3, als Monomere in der radikalischen Polymerisation.

Europäisches Patentamt

**EUROPÄISCHER RECHERCHENBERICHT**

0173128 Nummer der Anmeldung

EP 85 10 9876

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | | | C 07 C 103/60<br>C 08 F 20/58 |
| Y | US-A-3 898 279 (D.I. HOKE)<br>* Ansprüche; Spalte 6 *<br>--- | 1,4 | |
| Y | GB-A-1 290 775 (LUBRIZOL)<br>* Seite 1 *<br>----- | 1,4 | |

| RECHERCHIERTE SACHGEBIETE (Int. Cl.4) |
|---|
| C 07 C 103/00<br>C 08 F 20/00 |

Der vorliegende Recherchenbericht wurde für alle Patentansprüche erstellt.

| Recherchenort | Abschlußdatum der Recherche | Prüfer |
|---|---|---|
| DEN HAAG | 15-11-1985 | MOREAU J.M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82